# EUROPEAN PATENT SPECIFICATION

(11) **EP 1 359 784 B1**
(45) Date of publication and mention of the grant of the patent: **20.06.2007**
(21) Application number: 03396037.8
(22) Date of filing: 24.04.2003
(51) Int. Cl.: H04Q 7/38, H04B 7/005, H04L 12/56

(54) **Overload prevention**
ÜBERLASTVERHINDERUNG
PREVENTION DE SURCHARGE

(30) Priority: 03.05.2002 FI 20020841
(43) Date of publication of application: 05.11.2003
(73) Proprietor: TeliaSonera Finland Oyj, 00510 Helsinki (FI)
(72) Inventor: Laaksonen, Niina, 02230 Espoo (FI)
(74) Representative: Simmelvuo, Markku Kalevi

(56) References cited:
- EP-A- 1 043 909
- WO-A-00/14900
- WO-A-00/65747
- WO-A-99/12275
- US-A- 5 475 861
- DATABASE EPODOC EUROPEAN PATENT OFFICE, THE HAGUE, NL; 6 May 2001 (2001-05-06), XP001076191

## Description

### FIELD OF THE INVENTION

The present invention relates to telecommunication technology. The present invention concerns a method and system for reducing interference in a situation where a single mobile station could cause excessive interference in the operator's own network.

### BACKGROUND OF THE INVENTION

Management of radio resources is a substantial part of different telecommunication networks. This makes it possible for a plurality of users to have simultaneous wireless communication between a mobile station and a base station.

In the UTRAN radio access network (UTRAN, Universal Terrestrial Radio Access Network), radio resource management (RRM) is needed e.g. to maintain a given quality of service (QoS), capacity management, etc. Radio resource management allows optimization of the service capacity of radio frequencies.

Radio resource management is a comprehensive complex, and many different algorithms are needed for different functions. In the following, a few algorithms are presented by way of example:
1. Power Control
2. Handover Control
3. Admission Control
4. Load Control
5. Packet Scheduler
6. Data rate control.

Power control is one of the most important radio resource management algorithms especially in Code Division Multiple Access (CDMA) mobile communication systems. Without power management, a single mobile station could prevent all other communication in the cell.

Wireless communication systems need transmitters and receivers for the transmission and reception of radio-frequency signals. The transmission power from the mobile station to the base station (uplink) can cause interference to other cells. In mobile communication systems, e.g. UMTS/FDD (UMTS, Universal Mobile Communication System; FDD, Frequency Division Duplex) and in other mobile communication systems as well, there occur power leakages to adjacent frequencies or channels. In the UMTS/FDD system, the mobile station (UE, User Equipment) may cause interference to the adjacent or alternate channels (ACI, Adjacent Channel Interference), with the result that the adjacent or alternate frequencies are significantly disturbed or that the operation of the entire cell in the uplink direction is hindered.

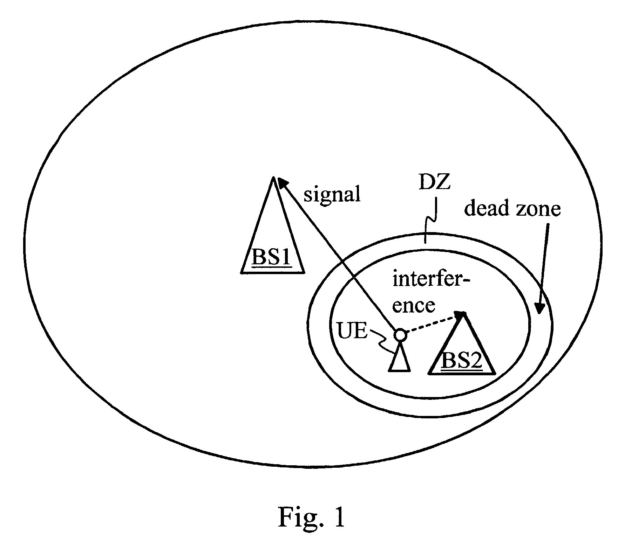

This may occur e.g. in a situation where a mobile station comes too close to a base station. Such a situation is visualized in Fig. 1. It shows two cells which are located close to each other and use adjacent or alternate frequencies. If a mobile station is communicating with base station BS1 and is located at a long distance from base station BS2, it uses a high transmission power. If the base station is simultaneously located close to base station BS2, which operates on an adjacent frequency, then the wireless communication from the mobile station to base station BS1 will cause interference to base station BS2. For example, base station BS1 is part of a macrocell and base station BS2 is part of a microcell. Base station BS2 compensates the rise in the interference level by asking the mobile stations communicating with it to use a higher power in the uplink direction. This leads to an increase of interference in the uplink direction, and the mobile stations can no longer communicate with the base station in the same way as before. As illustrated in Fig. 1, a kind of dead zone DZ has been formed, from where it is not possible to establish a connection to base station BS2. In the worst case, the interference to base station BS2 caused by the mobile station is so strong that base station BS2 can no longer detect any signals from mobile stations trying to establish a radio connection.

EP 1043909 provides a power control method that increases the performance and the throughput of wireless communication systems. In the solution an evaluation set, which is a super set of an active set of base transceiver stations serving specific users, is determined to prevent the negative effects of reverse jamming. A base station may send a request to a mobile terminal to use less transmission power.

One alternative for avoiding the above-described situation is to carry out an inter-frequency handover. However, this involves the problem that inter-frequency handover is not supported by all mobile communication systems. There may also arise a situation where inter-frequency handover is supported by the mobile communication system but not by the mobile station itself.

Another alternative for solving the present problem is that, if interference at base station B in the downlink direction is high, then a maximum transmission power in the downlink direction would be achieved. In this case, the mobile station would be dropped with the existing settings. However, this arrangement could only produce a solution to inter-operator interference of adjacent frequencies. The problem with this solution alternative is that the intensity of the interference depends on e.g. the load and many other circumstances that cannot be accurately determined beforehand.

### OBJECT OF THE INVENTION

The object of the invention is to overcome the above-mentioned drawbacks or at least to significantly alleviate them. A specific object of the invention is to disclose a new type of method and system in which it is possible within the mobile communication operator to reduce interference situations resulting from interference to a base station caused by a mobile station.

As for the features of the present invention, reference is made to the claims.

### BRIEF DESCRIPTION OF THE INVENTION

The present invention concerns a method and system for reducing interference in a mobile communication network. In the method, a mobile station communicates with a first base station of a mobile communication operator. A wireless connection between the first base station and the mobile station causes interference to the operation of a second base station of the mobile communication operator while distance of the mobile station to the second base station is shorter than the distance of the mobile station to the first base station which second base station communicates on an alternate or adjacent frequency to the frequency used by the mobile station to communicate with the first base station. The mobile station or the mobile communication network does not support inter-frequency handover.

According to the invention, the value of a maximum transmission power parameter of signals transmitted towards the aforesaid mobile station is reduced in the first base station to a predetermined fixed value in response to that inter-frequency handover is not supported. The communication for the mobile station is dropped by the aforesaid first base station in response to the power of the signals transmitted exceeding the reduced value of the maximum power parameter.

In an embodiment of the invention, the value of the maximum power parameter depends on the service used by the mobile station.

The invention also concerns a system for reducing interference in a mobile communication network. The mobile communication network comprises at least a mobile communication network controlled by a mobile communication operator. In addition, the system comprises a mobile station, a first base station, with which the mobile station communicates over a wireless connection, a second base station located near the first base station, and a maximum power parameter for the signal to be transmitted towards mobile stations. In the system, a wireless connection between the first base station and the mobile station causes interference to the operation of the second base station while a distance of the mobile station to the second base station of the mobile communication operator is shorter than the distance of the mobile station to the first base station, which second base station communicates on an alternate or adjacent frequency to the frequency used by the mobile station to communicate with the first base station. In this system, the mobile station and/or the mobile communication network does not support inter-frequency handover.

According to the invention, the system comprises adjusting means for reducing the value of the maximum power parameter for signals transmitted to the mobile station to a predetermined fixed value in response to that inter-frequency handover is not supported, and dropping means for dropping the communication for the mobile station from the first base station in response to the power of the signals transmitted exceeding the reduced value of the maximum power parameter.

In an embodiment of the invention, the value of the maximum power parameter depends on the service used by the mobile station.

In an embodiment of the invention, the mobile communication network is a WCDMA network (WCDMA, Wide-band Code Division Multiple Access).

The present invention discloses a simple method of solving the interference problem. Moreover, the solution disclosed in the invention does not require any additional operator investments in the mobile communication network.

### LIST OF FIGURES

In the following, the invention will be described in detail by the aid of embodiment examples, wherein
Fig. 1 presents a situation in a prior-art system where a mobile station produces a dead zone around a base station,
Fig. 2 presents an example flow diagram representing the operation of the method of the invention,
Fig. 3 presents a preferred system according to the invention.

### DETAILED DESCRIPTION OF THE INVENTION

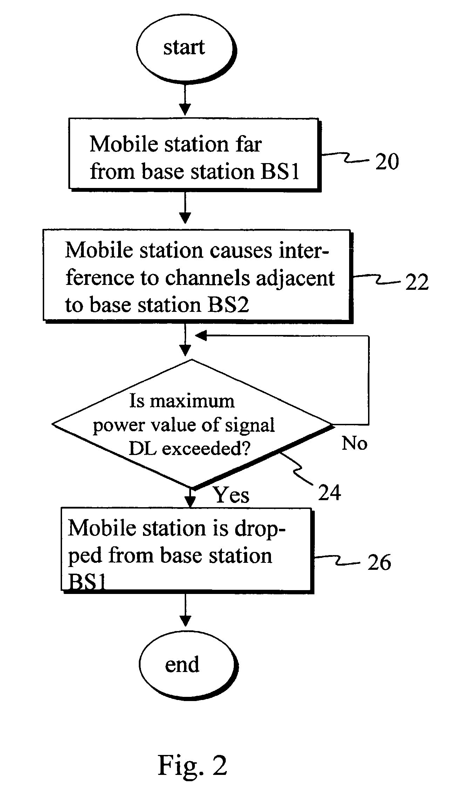

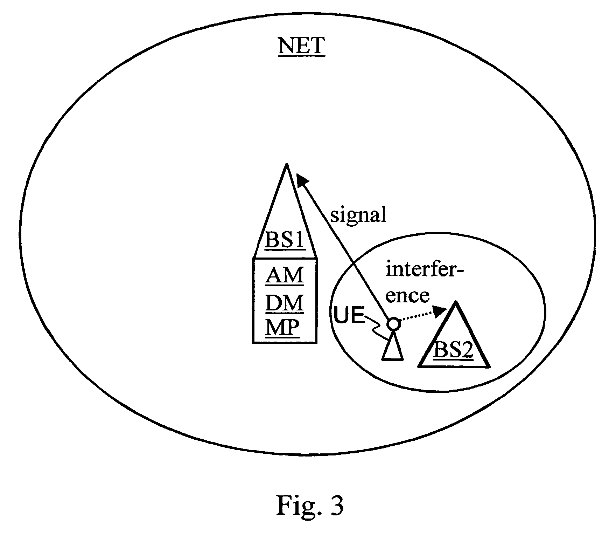

Figures 2 and 3 illustrate a preferred method and system according to the present invention. In the example in Fig. 2, it is assumed that the mobile station and/or the mobile communication network does not support inter-frequency handover or that inter-frequency handover will not succeed even if support for it exists.

The system illustrated in Fig. 3 comprises a mobile communication network NET, represented by two base stations BS1 and BS2 and a terminal UE, which is communicating with base station BS1. The mobile communication network is e.g. a WCDMA network. The terminal UE is preferably a mobile station. The mobile communication network NET also contains other components, which, however, are not specified here. The two cells shown in Fig. 3 are situated near each other and they use adjacent or alternate frequencies. Thus, it may be possible that the mobile station UE will produce excessive interference to an adjacent or alternate frequency (ACI, Adjacent Channel Interference). Interference may arise if the mobile station UE comes to close to base station BS2 while communicating with base station BS2. In base station BS1, there is additionally a maximum power parameter MP defined for the signal transmitted to mobile stations.

If the mobile station UE is communicating with base station BS1 and is located far from the base station BS1, then the mobile station UE will use a higher transmission power than when located closer to the base station BS1 (step 20). If the mobile station UE is simultaneously located near base station BS1, which works on an adjacent frequency, then the radio connection of the mobile station UE with base station BS1 may produce interference to base station BS2 (step 22). Base station BS1 is e.g. part of a macrocell and base station BS2 is part of a microcell.

For base station BS1, a maximum transmission power value is defined. If the value of the transmission power does not exceed the defined maximum value MP, then the connection between the mobile station UE and the base station BS1 is kept unchanged (step 24). However, if the transmission power value exceeds the value of the maximum power parameter MP, and because inter-frequency handover is not possible, then, according to the invention, the mobile station UE is dropped from the base station BS1 (step 26). Thus, the mobile station UE is dropped before it causes too much interference to base station BS2. If the mobile station is not dropped, then the result will be a situation like that illustrated in Fig. 1, where a so-called dead zone DZ is formed in the area of base station BS2. From the dead zone DZ, it is not possible to set up a connection with base station BS2, and therefore the coverage area of base station BS2 is substantially reduced.

The value of the maximum power parameter can be defined separately for each service available. The parameter is defined e.g. during the design of the radio network for those cells where this definition needs to be made. Moreover, it is necessary to make sure that no real-time radio resource management algorithm will not change or otherwise neglect the defined maximum transmission power value. The definition can also be changed afterwards.

The system presented in Fig. 3 comprises adjusting means AM for reducing the value of the maximum power parameter MP for the signal sent to the mobile station UE, and dropping means DM for dropping the aforesaid mobile station UE from the aforesaid base station BS1 when the power of the signal transmitted exceeds the value of the aforesaid maximum power parameter MP. The aforesaid means are implemented using means known in themselves, e.g. software components, and therefore they need not be described more closely.

The invention is not limited to the embodiment examples described above; instead, many variations are possible within the scope of the inventive concept defined in the claims.

## Claims

1. Method for reducing interference in a mobile communication network, in which method a mobile station communicates with a first base station of a mobile communication operator while a wireless connection between said first base station and said mobile station causes interference to the operation of a second base station of the mobile communication operator while distance of the mobile station to the second base station is shorter than the distance of the mobile station to the first base station which second base station communicates on an alternate or adjacent frequency to the frequency used by the mobile station to communicate with the first base station, and said mobile station or mobile communication network does not support inter-frequency handover;
**characterized in that** the method comprises the following steps:
reducing the value of a maximum power parameter for signals transmitted towards said mobile station in said first base station to a predetermined fixed value in response to that inter-frequency handover is not supported; and
dropping the communication for said mobile station from said first base station in response to the power of the signals transmitted exceeding said reduced value of the maximum power parameter.

2. Method according to claim 1, **characterized in that** the value of said maximum power parameter depends on the service used by said mobile station.

3. Method according to claim 1, **characterized in that** the mobile communication network is a WCDMA network.

4. System for reducing interference in a mobile communication system, said mobile communication system comprising at least:
a mobile communication network (NET) managed by a mobile communication operator;
a mobile station (UE);
a first base station (BS1), with which said mobile station (UE) is communicating (UE) over a wireless connection;
a second base station (BS2), which is located near said first base station (BS1);
a maximum power parameter (MP) for the signal to be transmitted towards mobile stations; and wherein a-wireless connection between said first base station (BS1) and said mobile station (UE) causes interference to the operation of said second base station (BS2) while a distance of the mobile station (UE) to said second base station (BS2) of the mobile communication operator is shorter than the distance of said mobile station (UE) to said first base station (BS1), which second base station (BS2) communicates on an alternate or adjacent frequency to the frequency used by the mobile station (UE) to communicate with the first base station (BS1) and in which system said mobile station (UE) and/or mobile communication network (NET) does not support inter-frequency handover;
**characterized in that** that the system comprises:
adjusting means (AM) for reducing the value of the maximum power parameter for signals transmitted towards said mobile station (UE) to a predetermined fixed value in response to that inter-frequency handover is not supported; and
dropping means (DM) for dropping the communication for said mobile station (UE) from the first base station (BS1) in response to the power of the signals transmitted exceeding said reduced value of the maximum power parameter (MP).

5. System according to claim 4, **characterized in that** the value of said maximum power parameter (MP) depends on the service used by said mobile station (UE).

6. System according to claim 4, **characterized in that** said mobile communication network (NET) is a WCDMA network.

## Patentansprüche

1. Verfahren zum Reduzieren von Interferenz in einem Mobilkommunikationsnetzwerk, wobei in dem Verfahren eine Mobilstation mit einer ersten Basisstation eines Mobilkommunikationsbetreibers kommuniziert, während eine drahtlose Verbindung zwischen der ersten Basisstation und der Mobilstation auf den Betrieb einer zweiten Basisstation des Mobilkommunikationsbetreibers Interferenz bewirkt, während ein Abstand der Mobilstation zu der zweiten Basisstation kürzer ist als der Abstand der Mobilstation zu der ersten Basisstation, wobei die zweite Basisstation auf einer Frequenz kommuniziert, die mit der Frequenz, welche zur Kommunikation der Mobilstation mit der ersten Basisstation benutzt wird, abwechselt oder zu ihr benachbart ist, und wobei die Mobilstation oder das Mobilkommunikationsnetzwerk keinen Interfrequenz-Handover unterstützt,
**dadurch gekennzeichnet, dass** das Verfahren die folgenden Verfahrensschritte aufweist:
Reduzieren des Wertes eines Maximalleistungsparameters in der ersten Basisstation für Signale, die in Richtung auf die Mobilstation übertragen werden, auf einen vorher festgelegten festen Wert, ausgelöst **dadurch**, dass der Interfrequenz-Handover nicht unterstützt wird; und
Aufheben der Kommunikation für die Mobilstation von der ersten Basisstation, ausgelöst **dadurch**, dass die Leistung der übertragenen Signale den reduzierten Wert des Maximalleistungsparameters übersteigt.

2. Verfahren nach Anspruch 1, **dadurch gekennzeichnet, dass** der Wert des Maximalmleistungsparameters von dem von der Mobilstation benutzten Dienst abhängt.

3. Verfahren nach Anspruch 1, **dadurch gekennzeichnet, dass** das Mobilkommunikationsnetzwerk ein WCDMA-Netzwerk ist.

4. System zur Reduzierung von Interferenz in einem Mobilkommunikationssystem, wobei das Mobilkommunikationssystem zumindest Folgendes aufweist:
ein Mobilkommunikationsnetzwerk (NET), welches von einem Mobilkommunikationsbetreiber geleitet wird;
eine Mobilstation (UE);
eine erste Basisstation (BS1), mit welcher die Mobilstation (UE) über eine drahtlose Verbindung kommuniziert (UE);
ein zweite Basisstation (BS2), welche in der Nähe der ersten Basisstation (BS1) angeordnet ist;
ein Maximalleistungsparameter (MP) für das in Richtung auf Mobilstationen zu übertragende Signal; und wobei eine drahtlose Verbindung zwischen der ersten Basisstation (BS1) und der Mobilstation (UE) auf den Betrieb der zweiten Basisstation (BS2) Interferenz bewirkt, während ein Abstand der Mobilstation (UE) zu der zweiten Basisstation (BS2) des Mobilkommunikationsbetreibers kürzer ist als der Abstand der Mobilstation (UE) zu der ersten Basisstation (BS1), wobei die zweite Basisstation (BS2) auf einer Frequenz kommuniziert, die mit der Frequenz, welche zur Kommunikation der Mobilstation (UE) mit der ersten Basisstation (BS1) benutzt wird, abwechselt oder zu ihr benachbart ist, und in welchem System die Mobilstation (UE) und/oder das Mobilkommunikationsnetzwerk (NET) keinen Interfrequenz-Handover unterstützt,
**dadurch gekennzeichnet, dass** das System Folgendes aufweist:
Einstelleinrichtungen (AM) zur Reduzierung des Wertes des Maximalleistungsparameters in der ersten Basisstation für in Richtung auf die Mobilstation (UE) übertragene Signale auf einen vorher festgelegten festen Wert, ausgelöst **dadurch**, dass der Interfrequenz-Handover nicht unterstützt wird; und
Einrichtungen (DM) zur Aufhebung der Kommunikation für die Mobilstation (UE) von der ersten Basisstation (BS1), ausgelöst **dadurch**, dass die Leistung der übertragenen Signale den reduzierten Wert des Maximalleistungsparameters (MP) übersteigt.

5. System nach Anspruch 4, **dadurch gekennzeichnet, dass** der Wert des Maximalleistungsparameters (MP) von dem von der Mobilstation (UE) benutzten Dienst abhängig ist.

6. System nach Anspruch 4, **dadurch gekennzeichnet, dass** das Mobilkommunikationsnetzwerk (NET) ein WCDMA-Netzwerk ist.

## Revendications

1. Procédé destiné à réduire des interférences dans un réseau de communication mobile, dans lequel une station mobile communique avec une première station de base d'un operateur de communication mobile alors qu'une connexion sans fil entre ladite première station de base et ladite station mobile cause des interférences dans le fonctionnement d'une seconde station de base de l'opérateur de communication mobile alors que la distance de la station mobile à la seconde station de base est plus courte que la distance de la station mobile à la première station de base dont la seconde station de base communique sur une fréquence alternative ou adjacente à la fréquence employée par la station mobile pour communiquer avec la première station de base, et ladite station mobile ou réseau de communication mobile ne prend pas en charge le transfert intercellulaire de fréquence intermédiaire ;
**caractérisé en ce que** le procédé comporte les étapes suivantes consistant à :
réduire la valeur d'un paramètre de puissance maximum pour des signaux transmis vers ladite station mobile dans ladite première station de base à une valeur fixe prédéterminée en réponse à ce transfert intercellulaire de fréquence intermédiaire n'étant pas pris en charge ; et
abandonner la communication pour ladite station mobile à partir de ladite première station de base en réponse à la puissance des signaux transmis excédant ladite valeur réduite du paramètre de puissance maximum.

2. Procédé selon la revendication 1, **caractérisé en ce que** la valeur dudit paramètre de puissance maximum dépend du service employé par ladite mobile station.

3. Procédé selon la revendication 1, **caractérisé en ce que** le réseau de communication mobile est un réseau WCDMA

4. Système destiné à réduire des interférences dans un réseau de communication mobile, ledit système de communication mobile comportant au moins :
un réseau de communication mobile (NET) commandé par un opérateur de communication mobile;
une station mobile (UE) :
une première station de base (BS1), avec laquelle ladite station mobile (UE) communique (UE) sur une connexion sans fil ;
une deuxième station de base (BS2), qui est localisée près de ladite première station de base (BS1) ;
un paramètre de puissance maximum (MP) pour le signal à transmettre vers des stations mobiles ; et dans lequel une connexion sans fil entre ladite première station de base (BS1) et ladite station mobile (UE) génère des interférences au fonctionnement de ladite deuxième station de base (BS2) alors qu'une distance de la station mobile (UE) à ladite seconde station de base (BS2) de l'opérateur de communication mobile est plus courte que la distance de ladite station mobile (UE) à ladite première station de base (BS1), dont la deuxième station de base (BS2) communique sur une fréquence alternative ou adjacente à la fréquence employée par la station mobile (UE) pour communiquer avec la première station de base (BS1), et dans lequel système ladite station mobile (UE) et/ou réseau de communication mobile (NET) ne prend pas en charge le transfert intercellulaire de fréquence intermédiaire ;
**caractérisé en ce que** le système comporte :
des moyens d'ajustement (AM) en vue de réduire la valeur du paramètre de puissance maximum pour des signaux transmis vers ladite station mobile (UE) à une valeur prédéterminé fixe en réponse à ce transfert intercellulaire de fréquence intermédiaire n'étant pas pris en charge ; et
des moyens d'abandon (DM) pour abandonner la communication pour ladite station mobile (UE) à partir de ladite première station de base (BS 1) en réponse à la puissance des signaux transmis excédant ladite valeur réduite du paramètre de puissance maximum (MP).

5. Système selon la revendication 4, **caractérisé en ce que** la valeur dudit paramètre de puissance maximum (MP) dépend du service employé par ladite station mobile (UE).

6. Système selon la revendication 4, **caractérisé en ce que** ledit réseau de communication mobile (NET) est un réseau WCDMA.
